# EUROPÄISCHE PATENTSCHRIFT

(11) **EP 0 983 157 B1**
(45) Veröffentlichungstag und Bekanntmachung des Hinweises auf die Patenterteilung: **12.09.2007**
(21) Anmeldenummer: 98948705.3
(22) Anmeldetag: 01.08.1998
(51) Int. Cl.: B60H 1/00

(54) **MEHRFACH-MAGNETVENTIL FÜR EINE FLÜSSIGKEITSGEREGELTE HEIZ- UND/ODER KÜHLANLAGE**
MULTIPLE MAGNETIC VALVE FOR A LIQUID-REGULATED HEATING AND/OR COOLING INSTALLATION
ELECTROVANNE MULTIPLE POUR INSTALLATION DE CHAUFFAGE ET/OU DE REFRIGERATION REGULEE PAR LIQUIDE

(30) Priorität: 03.12.1997 DE 19753575
(43) Veröffentlichungstag der Anmeldung: 08.03.2000
(73) Patentinhaber: ROBERT BOSCH GMBH, 70442 Stuttgart (DE)
(72) Erfinder: PFETZER, Johannes, D-77815 Bühl (DE)
(86) Internationale Anmeldenummer: PCT/DE1998/002208
(87) Internationale Veröffentlichungsnummer: WO 1999/028142

(56) Entgegenhaltungen:
- DE-A- 19 627 655
- US-A- 4 726 325
- US-A- 5 184 773
- US-A- 5 443 241
- US-A- 5 564 458
- PATENT ABSTRACTS OF JAPAN vol. 009, no. 191 (M-402), 7. August 1985 & JP 60 056624 A (TAIHEIYOU KOGYO KK), 2. April 1985

## Beschreibung

### Stand der Technik

Die Erfindung geht aus von einem Magnetventil für eine flüssigkeitsgeregelte Heiz- und/oder Kühlanlage.

Aus der EP 0 653 990 B1 ist ein Magnetventil mit einer Ventileinheit bekannt. Es wird insbesondere bei flüssigkeitsgeregelten Wärmetauschern für Heiz- und/oder Klimaanlagen in Kraftfahrzeugen verwendet. Es kann in Abhängigkeit von Temperaturen in der Heiz- und/oder Klimaanlage oder einem Fahrgastraum getaktet angesteuert werden, wobei durch den mittleren Zeitquerschnitt im wesentlichen der für die Heizung erforderliche Durchfluß bestimmt wird. Der Zeitquerschnitt ist bestimmt durch das Zeitintegral des wirksamen Öffnungsquerschnitts. Durch den Flüssigkeitsdruck in einem Zulaufkanal und/oder eine Ventilfeder wird ein Ventilglied des Magnetventils zu einem Ablaufkanal hin geöffnet und durch eine bestromte Magnetspule des Magnetventils geschlossen, indem sie auf einen mit einer Hubstange verbundenen Anker wirkt.

Auf der über das Ventilglied hinaus verlängerten Hubstange sitzt ferner ein Bypassventilglied, das einen zwischen dem Zulaufkanal und einem Rücklaufkanal angeordneten Bypasskanal steuert. Das Ventilglied und das Bypassventilglied sind aufeinander und auf eine Ventilfeder so abgestimmt, daß bei stromlosem Zustand der Magnetspule, die Durchflußmenge zum Ablaufkanal unabhängig von einem höheren Fördervolumen einer Pumpe konstant gehalten wird. Daher braucht der Zeitquerschnitt nur temperaturabhängig und nicht in Abhängigkeit vom Förderstrom der Pumpe geregelt zu werden. Der Förderstrom der Pumpe, die in der Regel von einer Brennkraftmaschine angetrieben wird, ändert sich nämlich mit ihrer Antriebsdrehzahl, d.h. mit der Drehzahl der Brennkraftmaschine.

### Vorteile der Erfindung

Die Erfindung betrifft ein Magnetventil für eine flüssigkeitsgeregelte Heiz- und/oder Kühlanlage nach den Merkmalen des Anspruchs 1. Das Magnetventil weist ein Ventilgehäuse mit mehreren Ventileinheiten auf, die getrennt ansteuerbar und verschiedenen Heizungswärmetauschern zugeordnet sind. Dadurch können mit einfachen Mitteln mehrere Heizkreisläufe für verschiedene Stellen eines Fahrzeugs, z.B. für die Fahrerseite und Beifahrerseite, getrennt und unabhängig voneinander geregelt werden.

Im stromlosen Zustand der Ventileinheiten wird die Durchflußmenge zu den Ablaufkanälen unabhängig von einem höheren Zulaufstrom von der Pumpe konstant gehalten. Hierbei ist es zweckmäßig, daß die wirksamen Durchmesser der Ventilsitze, der Ventilglieder sowie der Bypassventilglieder und die Kraft ihrer Ventilfedern so aufeinander abgestimmt sind, daß die Durchflußmenge im stromlosen Zustand bei allen Ventileinheiten gleich ist und auch dann bei den stromlosen Ventileinheiten erhalten bleibt, wenn einzelne Ventileinheiten bestromt werden. Somit wird vermieden, daß der Druck im System bei geschlossenen Ventilen ansteigt und Druckspitzen auftreten. Wenn die Ventilfedern so ausgelegt werden, daß die Bypassventilglieder erst bei einem vorgegebenen Durchfluß zu den Wärmetauschern öffnen, z.B. bei 1600 Liter pro Stunde, treten in diesem Bereich der Fördermenge der Pumpe keine Verluste an Heizleistung auf, da der gesamte Zufluß zu den Ventileinheiten an die Heizungswärmetauscher weitergeleitet wird.

Nach einer Ausgestaltung der Erfindung werden die Ventileinheiten in einem gemeinsamen Ventilgehäuse angeordnet. Auf äußere Verbindungsleitungen zwischen den Ventileinheiten kann verzichtet werden. Ferner ist durch innere Verbindungskanäle und Bypasskanäle der Aufwand für die Anschlüsse reduziert und der Druckanstieg wesentlich geringer, so daß man kleinere Magnetkreise verwenden kann. Hierdurch werden die Kosten, der Materialeinsatz, das Bauvolumen und das Gewicht verringert.

Der Rücklaufkanal des Magnetventils kann zweckmäßigerweise mit der Rücklaufleitung der Heizungswärmetauscher im Magnetventil selbst zusammengeführt werden, indem der Rücklaufkanal einen entsprechenden Anschluß aufweist. Sollte aus örtlichen Gegebenheiten am Fahrzeug die Rücklaufleitung auf einem kürzeren oder geeigneteren Weg verlegt werden können, wird der Rücklaufkanal außerhalb des Magnetventils an einer geeigneten Stelle an die Rücklaufleitung angeschlossen.

Ferner ist es zweckmäßig, für eine oder alle Ventileinheiten separate Ventilkammern mit austauschbaren Ventilsitzen vorzusehen. Somit kann das Magnetventil mit geringem Aufwand für unterschiedliche Einsatzfälle angepaßt werden, indem die Ventilkammern und die Ventilsitze ausgetauscht werden. Vorteilhaft werden die Ventilsitze aus einem Elastomer hergestellt. Durch die Elastizität und Dämpfungseigenschaft des Werkstoffs werden Schließgeräusche und Verschleiß an den Ventilgliedern verringert.

### Zeichnung

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: einen Querschnitt durch ein erfindungsgemäßes Magnetventil mit zwei Ventileinheiten, und
- Fig. 2: einen Schnitt entsprechend der Linie II-II in Fig. 1, bei der eine Hubstange der Ventileinheit in einer Zwischenposition dargestellt ist,
- Fig. 3: ein Einbauschema und
- Fig. 4: eine Variante zu Fig. 3.

### Beschreibung der Ausführungsbeispiele

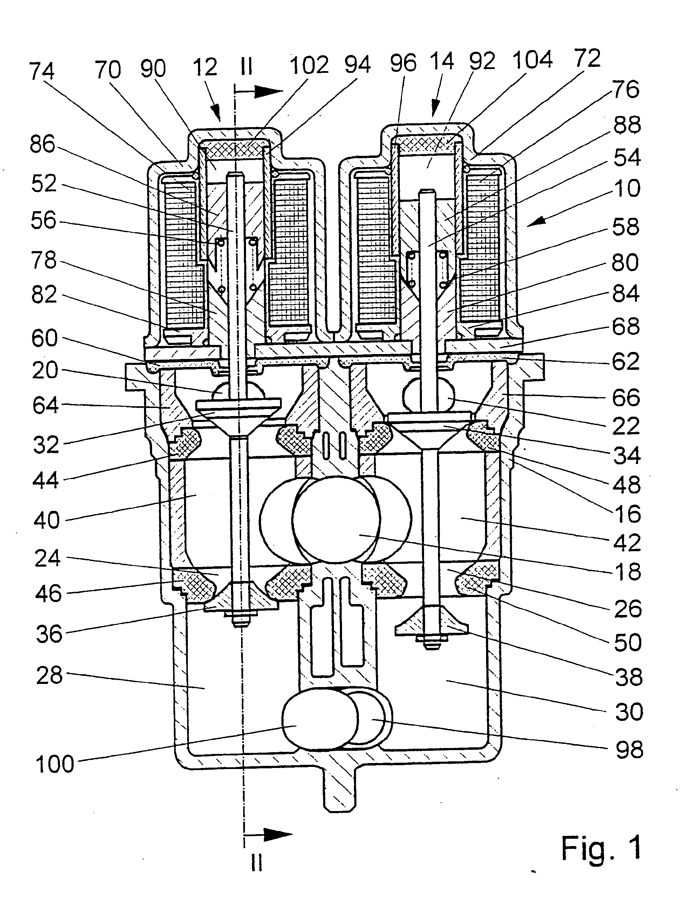

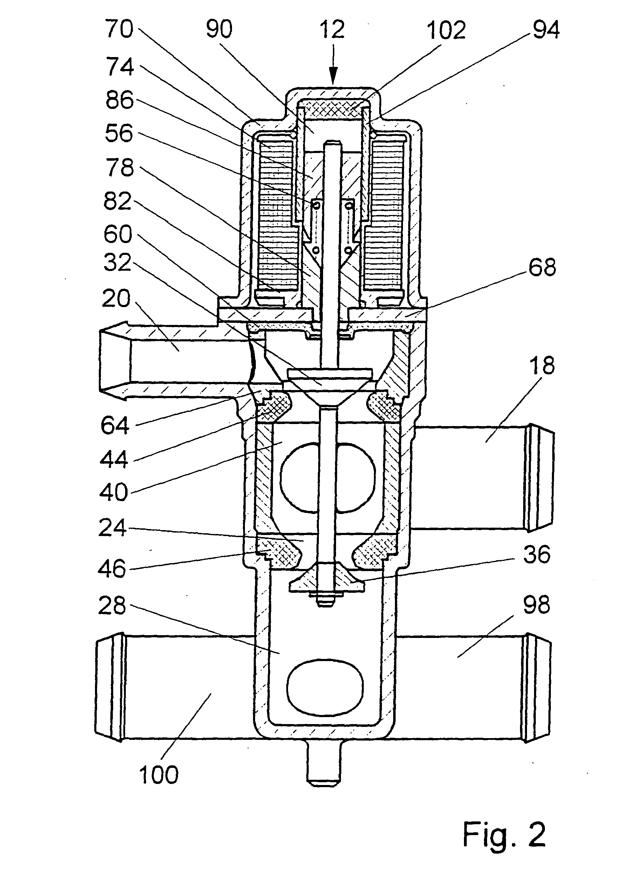

Das Magnetventil 10 nach Fig. 1 und Fig. 2 ist in einer Vorlaufleitung 106 zwischen einer Brennkraftmaschine 116 und Heizungswärmetauschern 108, 110 angeordnet. Es besitzt zwei Ventileinheiten 12, 14, die in einem Ventilgehäuse 16 eingesetzt sind. Das Ventilgehäuse 16 hat einen für beide Ventileinheiten 12, 14 gemeinsamen Zulaufkanal 18, der mit einer von der Brennkraftmaschine 116 angetriebenen Pumpe 118 verbunden ist. Ferner weist es zwei Ablaufkanäle 20, 22 auf, die mit verschiedenen Heizungswärmetauschern 108, 110 verbunden sind. Diese sind in der Regel verschiedenen Stellen im Fahrzeug zugeordnet, z.B. der Fahrerseite und der Beifahrerseite.

Die Ventileinheiten 12 und 14 sind gleich aufgebaut. Sie haben eine Magnetspule 74, 76 mit einem Spulenkörper 82, 84 und einem Magnetkern 78, 80. Die Magnetspule 74, 76 ist in einem Magnettopf 70, 72 untergebracht, der über eine Stützwand 68 am Ventilgehäuse 16 befestigt ist. In der Magnetspule 74, 76 ist ein Anker 86, 88 in einer Führungsbuchse 94, 96 axial verschiebbar geführt. Ein Deckel 102, 104 verschließt die Führungsbuchse 94, 96, so daß zwischen dem Deckel 102, 104, der Führungsbuchse 94, 96 und dem Anker 86, 88 ein Ankerraum 90, 92 gebildet wird, in den der Anker 86, 88 je nach Schaltposition mehr oder weniger eintaucht. Der Magnetkreis wird gebildet über den Magnetkern 78 bzw. 80, den Anker 86 bzw. 88, die Führungsbuchse 94 bzw. 96, den Magnettopf 70 bzw. 72 und die Stützwand 68.

Der Anker 86, 88 ist an einer Hubstange 52, 54 befestigt, z.B. verschweißt. Die Hubstange 52, 54 reicht durch den Magnetkern 78, 80 und die Stützwand 68 in das Ventilgehäuse 16 und durch eine Ventilkammer 40, 42 bis in eine Rücklaufkammer 28, 30. An der Stützwand 68 ist zum Ventilgehäuse 16 hin eine Membrandichtung 60, 62 angeordnet, die an der Hubstange 52, 54 anliegt.

Die Ventilkammer 40, 42 ist als separates Bauteil in das Ventilgehäuse 16 eingesetzt und weist an ihren Enden Ventilsitze 44, 48 und 46, 50 auf, die zweckmäßigerweise ebenfalls als separate Bauteile und aus einem Elastomer hergestellt sind.

Dadurch kann die Ventilkammer 40, 42 mit den Ventilsitzen 44,48 bzw. 46, 50 leicht ausgetauscht und dem jeweiligen Anwendungsfall angepaßt werden. Zwischen der Ventilkammer 40, 42 und der Stützwand 68 ist ein Distanzstück 64, 66 vorgesehen, in das der Ablaufkanal 20, 22 mündet.

Zum Ablaufkanal 20, 22 hin sitzt auf der Hubstange 52, 54 ein Ventilglied 32, 34, das mit dem Ventilsitz 44, 48 zusammenwirkt. Ferner sitzt auf dem der Rücklaufkammer 28, 30 zugewandten Ende der Hubstange 52, 54 ein Bypassventilglied 36, 38, das mit dem Ventilsitz 46, 50 zusammenwirkt und einen Bypasskanal 24, 26 steuert. Der gemeinsame Zulaufkanal 18 für beide Ventileinheiten 12 und 14 verläuft zwischen den Ventilkammern 40 und 42 und schneidet diese zwischen den Ventilsitzen 44, 48 und 46, 50 über einen ausreichenden Bereich ihres Umfangs an. Damit wird die Verbindung zwischen den beiden Ventilkammern 40 und 42 hergestellt.

Die Ventilglieder 32 und 34 mit ihren zugehörigen Ventilsitzen 44 und 48 sowie die Bypassventilglieder 36 und 38 mit ihren zugehörigen Ventilsitzen 46 und 50 sind zusammen mit den zugehörigen Ventilfedern 56 und 58 so aufeinander abgestimmt, daß im stromlosen Zustand der Magnetspulen 74 und 76 die Ventilglieder 32, 34 geöffnet sind und den zur Verfügung stehenden, von der Pumpe 118 geförderten Volumenstrom gleichmäßig auf die Ablaufkanäle 20 und 22 aufteilen. Steigt der Volumenstrom über ein vorgegebenes Maß hinaus, öffnen die Bypassventilglieder 36 und 38 entgegen der Kraft der zugehörigen Ventilfedern 56 und 58. Dadurch strömt der überschüssige Volumenstrom über die Bypasskanäle 24, 26 und die Rücklaufkammern 28 und 30 in den Rücklaufkanal 98. Der Rücklaufkanal 98 besitzt einen Anschluß 100 eine Verbindungsleitung zu den Heizungswärmetauschern 108, 110. Der Anschluß 100 ist zweckmäßigerweise versetzt zu dem Rücklaufkanal 98 angeordnet, der die Verbindung zur Pumpe 118 herstellt, um eine ausreichende, verbindende Überschneidung in der Trennwand zwischen den Rücklaufkammern 28 und 30 bei kleinen Kanalquerschnitten zu erreichen.

Fig. 2 zeigt das Ventilglied 32 der Ventileinheit 12 in einer Zwischenstellung, bei der die vorgegebene Durchflußmenge erreicht ist und konstant gehalten wird. Die Darstellung in Fig. 2 weicht insofern von der Darstellung in Fig. 1 ab, in der das Ventilglied 32 ganz geöffnet und das Bypassventilglied 36 geschlossen ist.

Die Durchflußmenge der einzelnen Ventileinheiten 12, 14 kann temperaturabhängig beeinflußt werden, indem die Magnetspulen 74 oder 76 einzeln oder gemeinsam, getaktet angesteuert werden. Wird eine Magnetspule 74 oder 76 erregt, wird der zugehörige Anker 86 oder 88 entgegen der Kraft der zugehörigen Ventilfeder 56 oder 58 vom Magnetkern 78 oder 80 angezogen und das entsprechende Ventilglied 32 bzw. 34 schließt, während das entsprechende Bypassventilglied 36 bzw. 38 öffnet.

Fig. 1 zeigt die Ventileinheit 14 in einem bestromten Zustand der Magnetspule 76. Dagegen ist die Magnetspule 74 der Ventileinheit 12 stromlos, wobei die vorgegebene Durchflußmenge noch nicht überschritten ist, so daß das Ventilglied 32 geöffnet und das Bypassventilglied 36 geschlossen ist.

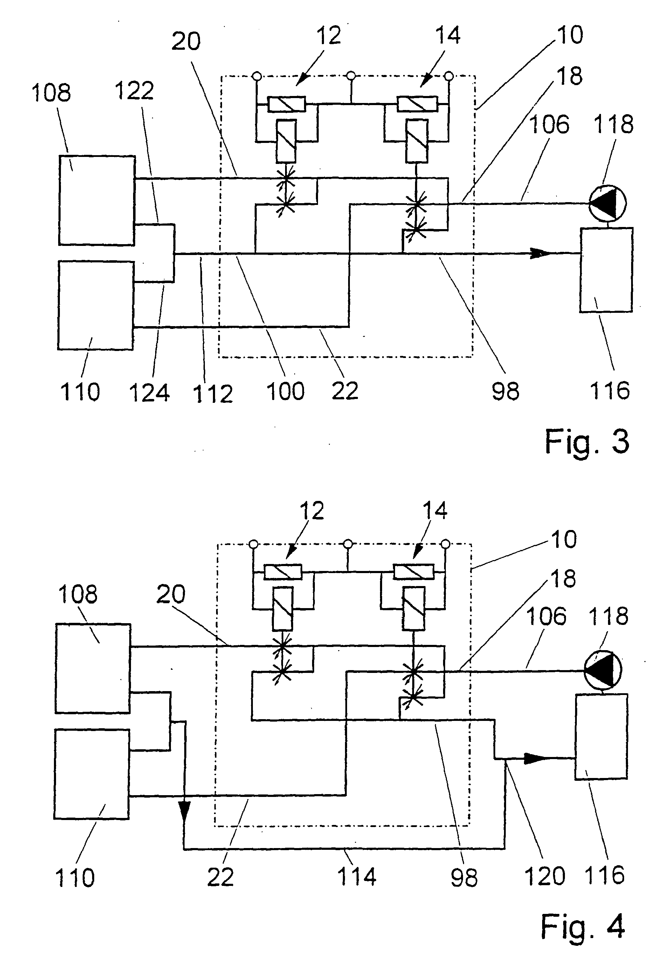

Bei dem Ausführungsbeispiel nach Fig. 1 bis 3 ist die Rücklaufleitung 112 von den Heizungswärmetauschern 108, 110 über das Magnetventil 10 geführt und zwar über den Anschluß 100 und den Rücklaufkanal 98. Dabei kann es zweckmäßig sein, daß das Magnetventil 10 als Verbindung zwischen getrennt geführten Rücklaufleitungen 122 und 124 dient, indem die Rücklaufleitungen 122, 124 über Kanäle im Magnetventil 10 mit dem Rücklaufkanal 98 verbunden sind. Je nach räumlicher Anordnung der Heizungswärmetauscher 108, 110, des Magnetventils 10 und der Brennkraftmaschine 116 kann es zweckmäßig sein, daß die Rücklaufleitung 112 von den Heizungswärmetauschern 108, 110 nicht über das Magnetventil 10 geführt wird, sondern eine Rücklaufleitung 114 auf einem kürzeren oder günstigeren Weg zur Brennkraftmaschine 116 verlegt und an deren Kühlsystem angeschlossen wird (Fig. 4). In diesem Fall kann der Anschluß 100 entfallen und der Rücklaufkanal 98 wird an einer geeigneten Stelle 120 des Fahrzeugs an die Rücklaufleitung 114 angeschlossen, die von den Heizungswärmetauschern 108, 110 zur Brennkraftmaschine 116 führt.

## Patentansprüche

1. Magnetventil (10) für eine flüssigkeitsgeregelte Heiz- und/oder Kühlanlage,
- wobei das Magnetventil (10) ein Ventilgehäuse (16) mit mehreren Ventileinheiten (12, 14) aufweist,
- wobei jede Ventileinheit (12, 14) eine Ventilkammer (40, 42), einen Ablaufkanal (20, 22), eine Rücklaufkammer (28, 30) und einen Bypasskanal (24, 26) zwischen der Ventilkammer (40, 42) und der Rücklaufkammer (28, 30) aufweist,
- wobei jede Ventileinheit (12, 14) ein elektromagnetisch geschaltetes Ventilglied (32, 34) und Bypassventilglied (36, 38) aufweist, die zusammen mit einem Anker (86, 88) auf einer Hubstange (52, 54) befestigt sind,
- wobei das jeweilige Ventilglied (32, 34) die Verbindung zwischen der Ventilkammer (40, 42) und dem Ablaufkanal (20, 22) herstellt und in einer bestromten Schaltstellung sperrt, während das jeweilige Bypassventilglied (36, 38)
- in einer stromlosen Schaltstellung die Verbindung zwischen dem Bypasskanal (24, 26) und der Rücklaufkammer (28, 30) förderstromabhängig sperrt
- und in der bestromten Schaltstellung die Verbindung zwischen dem Bypasskanal (24, 26) und der Rücklaufkammer (28, 30) herstellt,
- wobei die Ventilkammern (40, 42) der Ventileinheiten (12, 14) miteinander verbunden sind und einen gemeinsamen Zulaufkanal (18) aufweisen
- und wobei die Rücklaufkammern (28, 30) der Ventileinheiten (12, 14) einen gemeinsamen Rücklaufkanal (98) aufweisen.

2. Magnetventil (10) nach Anspruch 1, **dadurch gekennzeichnet, dass** die Ventilkammer (40, 42) in die Ventileinheit (12, 14) einsetzbar ist, und zu dem Ablaufkanal (20, 22) und dem gemeinsamen Rücklaufkanal (98) je einen Ventilsitz (44, 46; 48, 50) aufweist, der mit dem Ventilglied (32, 34) bzw. dem Bypassventilglied (36, 38) zusammenarbeitet.

3. Magnetventil (10) nach Anspruch 2, **dadurch gekennzeichnet, dass** die Ventilsitze (44, 46) aus einem Elastomer hergestellt sind.

4. Magnetventil (10) nach einem der vorhergehenden Ansprüche, **dadurch gekennzeichnet, dass** die wirksamen Durchmesser der Ventilsitze (44, 46; 48, 50) und der Ventilglieder (32, 34) sowie der Bypassventilglieder (36, 38) und die Kraft von auf die Ventilglieder (32, 34, 36, 38) wirkenden Ventilfedern (56, 58) so aufeinander abgestimmt sind, dass die Durchflussmenge zu den Ablaufkanälen (20, 22) an den stromlosen Ventileinheiten (12, 14) bei allen Ventileinheiten (12, 14) unabhängig von der momentanen Fördermenge einer Pumpe (118) gleich ist und dass diese Durchflussmenge an den stromlosen Ventileinheiten (12) auch dann erhalten bleibt, wenn eine andere Ventileinheit (14) bestromt ist.

5. Magnetventil (10) nach Anspruch 4, **dadurch gekennzeichnet, dass** die Ventilfedern (56, 58) so ausgelegt sind, dass die Bypassventilglieder (36, 38) der stromlosen Ventileinheiten (12) erst bei Erreichen einer vorgegebenen Fördermenge der Pumpe (118) öffnen.

6. Magnetventil (10) nach einem der vorhergehenden Ansprüche, **dadurch gekennzeichnet, dass** über eine Rücklaufleitung (112) zumindest ein Heizungswärmetauscher (108, 110) an einem Anschluss (100) des Magnetventils (10) angeschlossen ist.

7. Magnetventil (10) nach einem der vorhergehenden Ansprüche, **dadurch gekennzeichnet, dass** von den Heizungswärmetauschern Rücklaufleitungen (122, 124) bis zum Magnetventil (10) getrennt und über Kanäle innerhalb des Magnetventils (10) mit dem Rücklaufkanal (98) verbunden sind.

## Claims

1. Solenoid valve (10) for a liquid-controlled heating and/or cooling system,
- the solenoid valve (10) having a valve housing (16) with a plurality of valve units (12, 14),
- each valve unit (12, 14) having a valve chamber (40, 42), an outlet channel (20, 22), a return chamber (28, 30) and a bypass channel (24, 26) between the valve chamber (40, 42) and the return chamber (28, 30),
- each valve unit (12, 14) having an electromagnetically switched valve element (32, 34) and bypass valve element (36, 38) which, together with an armature (86, 88), are fixed to a reciprocating rod (52, 54),
- the respective valve element (32, 34) making the connection between the valve chamber (40, 42) and the outlet channel (20, 22) and blocking the said connection in an energized switching position, whereas the respective bypass valve element (36, 38)
- blocks the connection between the bypass channel (24, 26) and the return chamber (28, 30) in a de-energized switching position as a function of the feed flow,
- and makes the connection between the bypass channel (24, 26) and the return chamber (28, 30) in the energized switching position,
- the valve chambers (40, 42) of the valve units (12, 14) being connected to one another and having a common inlet channel (18),
- and the return chambers (28, 30) of the valve units (12, 14) having a common return channel (98).

2. Solenoid valve (10) according to Claim 1, **characterized in that** the valve chamber (40, 42) can be inserted into the valve unit (12, 14) and has a respective valve seat (44, 46; 48, 50) for the outlet channel (20, 22) and the common return channel (98), said valve seat interacting with the valve element (32, 34) or, respectively, the bypass valve element (36, 38).

3. Solenoid valve (10) according to Claim 2, **characterized in that** the valve seats (44, 46) are produced from an elastomer.

4. Solenoid valve (10) according to one of the preceding claims, **characterized in that** the effective diameter of the valve seats (44, 46; 48, 50) and of the valve elements (32, 34) and also of the bypass valve elements (36, 38) and the force of valve springs (56, 58) which act on the valve elements (32, 34, 36, 38) are matched to one another such that the throughflow rate to the outlet channels (20, 22) at the de-energized valve units (12, 14) is identical for all valve units (12, 14) irrespective of the momentary feed rate of a pump (118), and **in that** this throughflow rate at the de-energized valve units (12) is also maintained when another valve unit (14) is energized.

5. Solenoid valve (10) according to Claim 4, **characterized in that** the valve springs (56, 58) are designed such that the bypass valve elements (36, 38) of the de-energized valve units (12) open only when a prespecified feed rate of the pump (118) is reached.

6. Solenoid valve (10) according to one of the preceding claims, **characterized in that** at least one heater heat exchanger (108, 110) is connected to a connection (100) of the solenoid valve (10) via a return line (112).

7. Solenoid valve (10) according to one of the preceding claims, **characterized in that** return lines (122, 124) are separated from the heater heat exchangers as far as the solenoid valve (10) and are connected to the return channel (98) via channels within the solenoid valve (10).

## Revendications

1. Electrovanne (10) pour une installation de chauffage et/ou de refroidissement régulée par le liquide, selon laquelle
- l'électrovanne (10) comporte un corps (16) muni de plusieurs unités de vanne (12, 14),
- chaque unité de vanne (12, 14) a une chambre de vanne (40, 42), un canal de sortie (20, 22), une chambre de retour (28, 30) et un canal de dérivation (24, 26) entre les chambres de vannes (40, 42) et les chambres de retour (28, 30),
- chaque unité de vanne (12, 14) comporte une soupape (32, 34) à commutation électromagnétique et une soupape de dérivation (36, 38), ces soupapes étant fixées en commun avec un induit (86, 88) sur une tige de manoeuvre (52, 54),
- la soupape (32, 34) réalisant la liaison entre la chambre de soupape (40, 42) et le canal de sortie (20, 22) et elle ferme cette communication en position de commutation alimentée par le courant, alors que la soupape de dérivation (36, 38) respective
- à l'état de commutation courant coupé, ferme la communication entre le canal de dérivation (24, 26) et la chambre de retour (28, 30),
- et dans la position de commutation alimentée en courant, elle réalise la communication entre le canal de dérivation (24, 26) et la chambre de retour (28, 30),
- les chambres de vanne (40, 42) des unités de vanne (12, 14) étant reliées et ayant un canal d'alimentation (18) commun, et
- les chambres de retour (28, 30) des unités de vanne (12, 14) ont un canal de retour commun (98).

2. Electrovanne (10) selon la revendication 1,
**caractérisée en ce que**
les chambres de vanne (40, 42) se logent dans l'unité de vanne (12, 14) et ont pour le canal de sortie (20, 22) et le canal de retour (98) commun, un siège de soupape (44, 46 ; 48, 50) respectif, coopérant avec la soupape (32, 34) ou la soupape de dérivation (36, 38).

3. Electrovanne (10) selon la revendication 2,
**caractérisée en ce que**
les sièges de soupape (44, 46) sont fabriqués en un élastomère.

4. Electrovanne (10) selon l'une des revendications précédentes,
**caractérisée en ce que**
le diamètre actif des sièges de soupape (44, 46 ; 48, 50) et des organes de soupape (34, 36) et des soupapes de dérivation (36, 38) et la force des ressorts de soupape (56, 58) agissant sur les soupapes (32, 34, 36, 38) sont accordés pour que le débit vers les canaux de sortie (20, 22) dans les unités de vanne (12, 14) coupées du courant électrique, sont les mêmes pour toutes les unités de vanne (12, 14) indépendamment du débit instantané d'une pompe (118) et
ces débits restent également maintenus pendant que les unités de vanne (12) sont coupées du courant électrique, lorsqu'une autre unité de vanne (14) est alimentée en courant.

5. Electrovanne (10) selon la revendication 4,
**caractérisée en ce que**
les ressorts de soupape (56, 58) sont conçus pour que les soupapes de dérivation (36, 38) des soupapes (12) coupées du courant électrique, ne s'ouvrent que lorsque la pompe (118) fournit un débit prédéterminé.

6. Electrovanne (10) selon l'une des revendications précédentes,
**caractérisée en ce qu'**
au moins un échangeur de chaleur de chauffage (108, 110) est relié au branchement (100) de l'électrovanne (10) par une conduite de retour (112).

7. Electrovanne (10) selon l'une des revendications précédentes,
**caractérisé en ce que**
les conduites de retour (122, 124) des échangeurs de chaleur de chauffage sont séparées jusqu'à l'électrovanne (10) et sont reliées au canal de retour (98) par des canaux à l'intérieur de l'électrovanne (10).
